# EUROPEAN PATENT APPLICATION

(11) **EP 4 458 503 A1**
(43) Date of publication of application: **06.11.2024**
(21) Application number: 22915850.6
(22) Date of filing: 21.12.2022
(51) Int. Cl.: B23K 10/00, B23K 10/02

(54) **WELDING TORCH**

(30) Priority: 28.12.2021 JP 2021213804
(71) Applicant: DAIHEN Corporation, Yodogawa-ku Osaka-shi Osaka 532-8512 (JP)
(72) Inventor: TAKATA, Chikara, Osaka-shi, Osaka 532-8512 (JP)
(74) Representative: Boult Wade Tennant LLP
(86) International application number: PCT/JP2022/047037
(87) International publication number: WO 2023/127626

(57) **Abstract**

A welding torch includes a non-consumable electrode extending along an axial direction, a first member disposed outwardly of the non-consumable electrode, an inner nozzle disposed outwardly of the non-consumable electrode, an engaging member disposed outwardly of engaging with the first member and the inner nozzle, an outer nozzle disposed outwardly of the inner nozzle, and an electrode extrusion member disposed outwardly of the non-consumable electrode and inwardly of the inner nozzle. The electrode extrusion member is concentrically disposed outwardly of the non-consumable electrode, and the inner nozzle is concentrically disposed outwardly of the electrode extrusion member. A first gas flow path for flowing a first inert gas is provided between the non-consumable electrode and the inner nozzle. A second gas flow path for flowing a second inert gas is provided between the inner nozzle and the outer nozzle.

## Description

### TECHNICAL FIELD

The present invention relates to a welding torch.

### BACKGROUND ART

In welding using a welding torch with a consumable electrode (e.g. a TIG welding method and a plasma welding method), an arc is usually generated between an electrode (a non-consumable electrode) composed of tungsten and a welded material, and the heat of the arc melts the welded material. In a TIG welding method, shield gas is provided between a gas nozzle and an electrode. In a plasma welding method, in addition to shield gas, plasma gas is provided within an insert tip around an electrode to constrict an arc (plasma arc). As a result, a well-concentrated high-temperature plasma flow is generated, whose energy is used for performing welding.

When welding metals with relatively low melting points (low-melting metals) such as a galvanized steel sheet, welding heat generates zinc vapor and fumes. Metals in fumes and so forth attach to the electrode, resulting in an unstable arc during welding. In the TIG welding method, the tip of the electrode usually protrudes from the tip of the nozzle. When the tip of the electrode is covered with metals in fumes and so forth, ignition failure may occur at the start of welding. In the plasma welding method, the tip of the electrode is usually retracted beyond the tip of the insert tip around the electrode. In addition, plasma gas is provided within the insert tip (around the electrode). Thus, when welding low-melting metals such as galvanized steel sheet, metals in fumes and so forth are less likely to attach to the electrode in the plasma welding method compared to the TIG welding method. However, in the plasma welding method, the above metals in fumes and so forth may attach to and alloy with the tip of the insert tip. This alloying tip of the insert tip may cause defective arc and defective welding.

Patent Literature 1 (JP-A1-2009-172644) discloses a configuration of an insert tip with a tip having a plasma gas discharge hole and side plasma gas discharge holes consisting of small diameter holes around the plasma gas discharge hole. These side plasma gas discharge holes are additionally provided so as to reduce the attachment of fumes and so forth to the tip of the insert tip during welding. However, the insert tip (a welding torch) disclosed in Patent Literature 1 has a complex structure with the tip being larger. Further, when the axis of the insert tip, which is disposed around the electrode with a gap, is offset from the axis center of the electrode, the plasma gas discharged from the tip of the insert tip has uneven flow, so that there may occur a problem that the welding quality deteriorates.

### PRIOR ART DOCUMENT

### PATENT DOCUMENT

Patent Document 1: JP-A-2009-172644

### SUMMARY OF THE INVENTION

### Problem to be solved by the Invention

Considering the situation described above, an object of the present invention is to provide a welding torch that has a simplified structure with a small tip and is suitable for welding low-melting metals.

### Means to solve the problem

For solving the above problem, the present invention includes following technical means.

According to a first aspect of the present invention, a welding torch is provided. The welding torch includes a non-consumable electrode extending along an axial direction, a first member with a cylindrical shape disposed outwardly of the non-consumable electrode in a radial direction, an inner nozzle disposed outwardly of the non-consumable electrode in the radial direction and at one side in the axial direction with respect to the first member, an engaging member disposed outwardly of and covering a first end of the first member at the one side in the axial direction and a second end of the inner nozzle at another side in the axial direction, the engaging member coming into engagement with the first member and the inner nozzle, an outer nozzle disposed outwardly of the inner nozzle in a radial direction, and an electrode extrusion member disposed outwardly of the non-consumable electrode in the radial direction and inwardly of the inner nozzle in the radial direction, wherein the electrode extrusion member is concentrically disposed outwardly of the non-consumable electrode, the inner nozzle is concentrically disposed outwardly of the electrode extrusion member, a first gas flow path for flowing a first inert gas is provide between the non-consumable electrode and the inner nozzle, and a second gas flow path for flowing a second inert gas between the inner nozzle and the outer nozzle.

In a preferred embodiment, the engaging member and the first end of the first member are connected to each other with a screw.

In a preferred embodiment, the welding torch further includes a first gas inlet leading to the first gas flow path, and a second gas inlet leading to the second gas flow path, wherein a flow rate of the first inert gas introduced into the first gas inlet and a flow rate of the second inert gas introduced into the second gas inlet are independently adjusted.

In a preferred embodiment, the first inert gas and the second inert gas are at least one gas selected from argon gas and helium gas.

In a preferred embodiment, the first gas flow path has a first minimum gap that is a minimum gap between the non-consumable electrode and the inner nozzle, the second gas flow path has a second minimum gap that is a minimum gap between the inner nozzle and the outer nozzle, and the first minimum gap is 0.2 to 0.5 times the second minimum gap.

According to a second aspect of the present invention, a welding system is provided. The welding system includes the welding torch according to the first aspect of the present invention, a gas supply source leading to the first gas flow path and the second gas flow path, a first gas adjustment part interposed between the gas supply source and the first gas flow path to adjust an amount of the first inert gas flowing in the first gas flow path, and a second gas adjustment part interposed between the gas supply source and the second gas flow path to adjust an amount of the second inert gas flowing in the second gas flow path.

According to a third aspect of the present invention, a welding system is provided. The welding system includes the welding torch according to the first aspect of the present invention, a first gas supply source leading to the first gas flow path, a second gas supply source leading to the second gas flow path, a first gas adjustment part interposed between the first gas supply source and the first gas flow path to adjust an amount of the first inert gas flowing in the first gas flow path, and a second gas adjustment part interposed between the second gas supply source and the second gas flow path to adjust an amount of the second inert gas flowing in the second gas flow path.

### Advantages of the Invention

The welding torch according to the present invention includes the electrode extrusion member and the engaging member. The electrode extrusion member is concentrically disposed outwardly of the non-consumable electrode, and the inner nozzle is concentrically disposed outwardly of the electrode extrusion member. Thus, the inner nozzle is disposed concentrically with the non-consumable electrode via the electrode extrusion member. The engaging member is disposed outwardly of and covering a first end of the first member at the one side in the axial direction and a second end of the inner nozzle at the other side in the axial direction, the engaging member coming into engagement with the first member and the inner nozzle. This configuration allows flexibility in the radial direction between the engaging member and the first member or the inner nozzle. Therefore, even if the non-consumable electrode is, for example, bent due to manufacturing errors, the inner nozzle may be disposed concentrically with the non-consumable electrode.

Other features and advantages of the present invention will become apparent from the detailed description given below with reference to the accompanying drawings.

### BRIEF DESCRIPTION OF THE DRAWINGS

Fig. 1 is a schematic configuration diagram showing an example of a welding system including a welding torch according to the present invention;
Fig. 2 is a perspective view showing an example of a welding torch according to the present invention;
Fig. 3 is a plan view of the welding torch shown in Fig. 2;
Fig. 4 is a sectional view taken along line IV-IV in Fig. 3;
Fig. 5 is a sectional view taken along line V-V in Fig. 3;
Fig. 6 is an enlarged sectional view taken along line VI-VI in Fig. 4;
Fig. 7 is an enlarged sectional view taken along line VII-VII in Fig. 4;
Fig. 8 is an enlarged sectional view taken along line VIII-VIII in Fig. 4;
Fig. 9 is a partially enlarged view of Fig. 4;
Fig. 10 is a schematic configuration diagram showing another example of a welding system.

### MODE FOR CARRYING OUT THE INVENTION

Preferred embodiments of the present invention are described below with reference to the accompanying drawings.

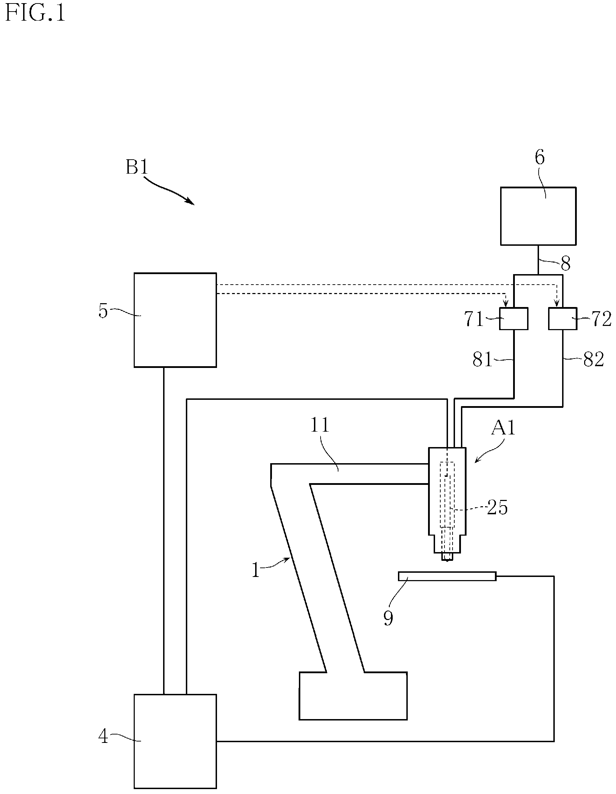

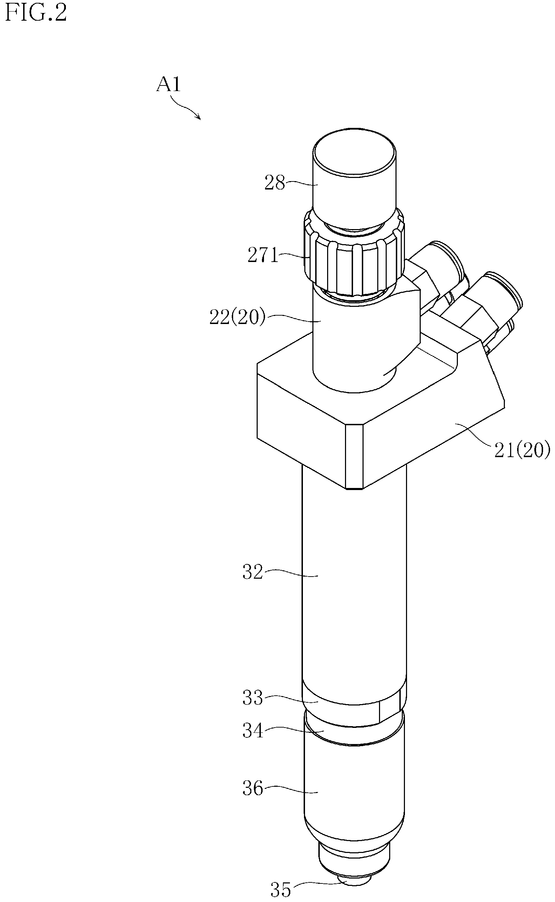

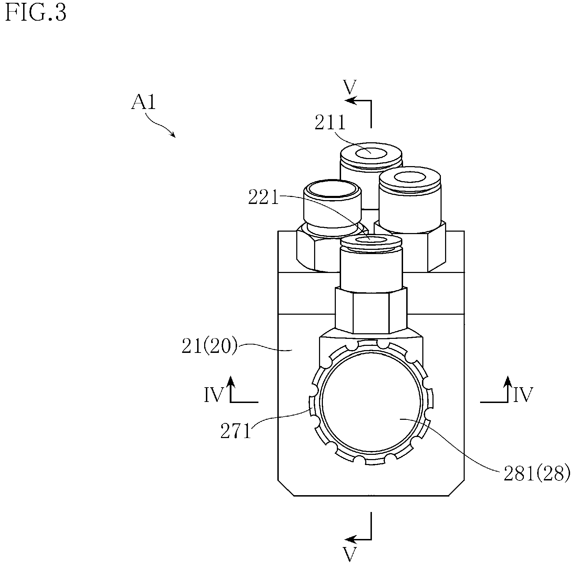

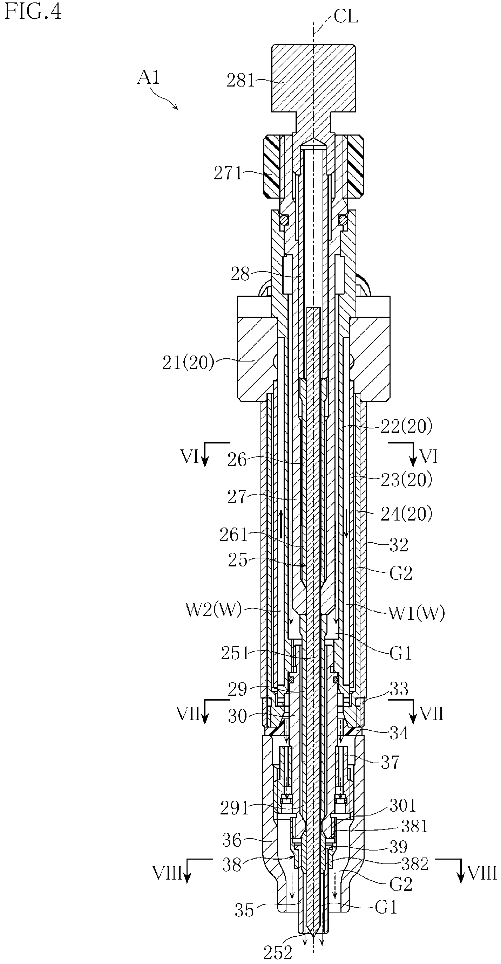

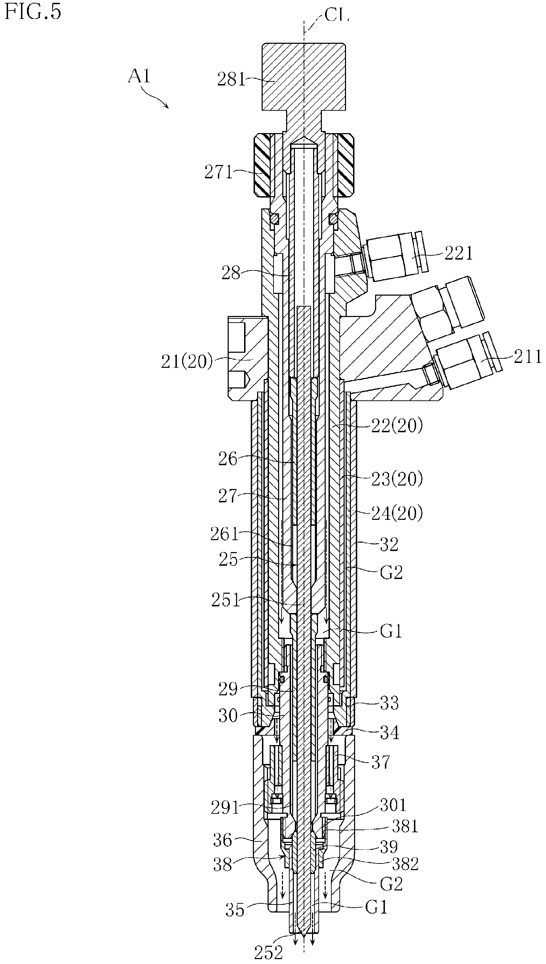

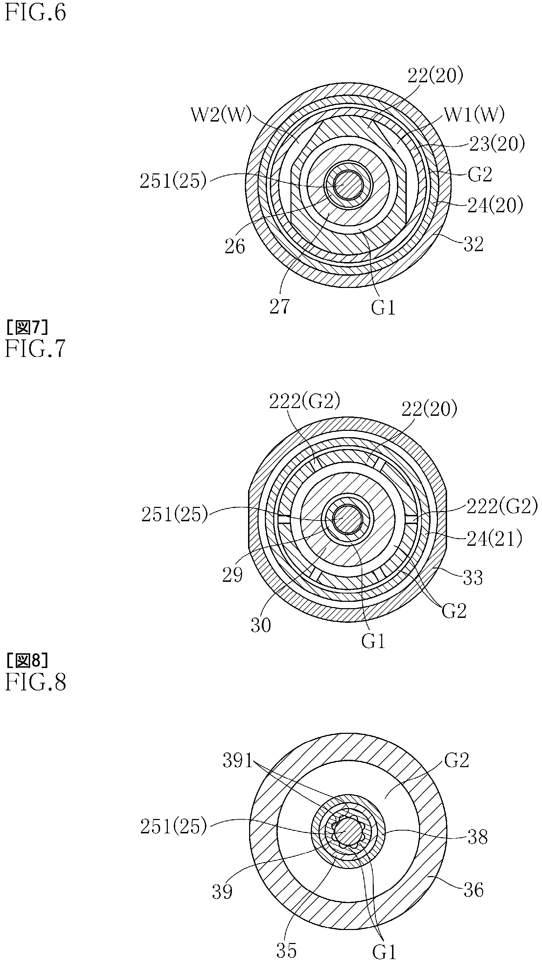

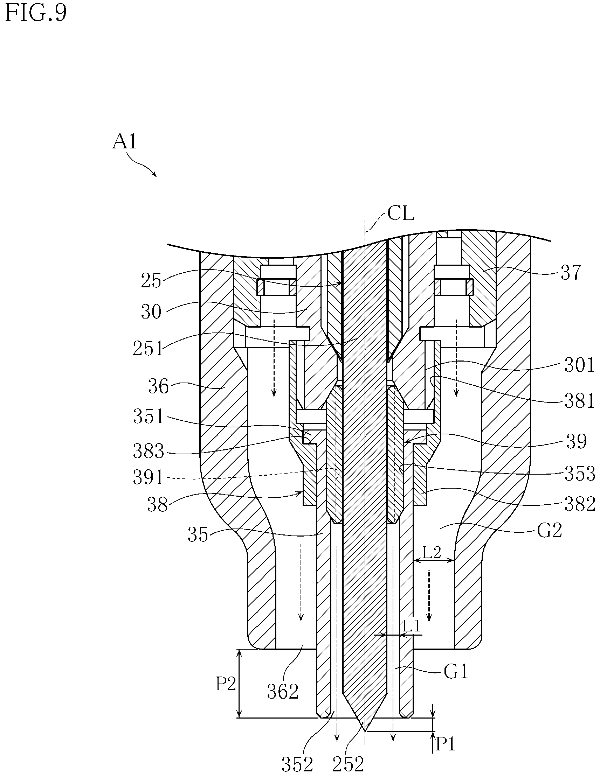

Fig. 1 is a schematic configuration diagram showing an example of a welding torch according to the present invention. Fig. 2 is a perspective view showing an example of a welding torch according to the present invention. Fig. 3 is a plan view of the welding torch shown in Fig. 2. Fig. 4 is a sectional view taken along line IV-IV in Fig. 3. Fig. 5 is a sectional view taken along line V-V in Fig. 3. Fig. 6 is an enlarged sectional view taken along line VI-VI in Fig. 4. Fig. 7 is an enlarged sectional view taken along line VII-VII in Fig. 4. Fig. 8 is an enlarged sectional view taken along line VIII-VIII in Fig. 4. Fig. 9 is a partially enlarged view of Fig. 4.

The welding system B1 shown in Fig. 1 is for welding onto a welded material 9. The welded material 9 is a metal plate. More specifically, the welded material 9 is a plate material that is made of low-melting metals such as a galvanized steel sheet. The welding system B1 shown in Fig. 1 includes a robot 1, a welding torch A1, a power source 4, a controller 5, a gas supply source 6, a first gas adjustment part 71, a second gas adjustment part 72, and a gas pipe 8.

The robot 1 includes a manipulator 11, and is, for example, an articulated robot. The welding torch A1 is carried by the manipulator 11. Driving the manipulator 11 enables the welding torch A1 to move freely up, down, forward, backward, left and right.

The power source 4 supplies an electric power to the welding torch A1. The power source 4 is connected to the welded material 9. The gas supply source 6 is for supplying a predetermined welding gas to the welding torch A1. In the present embodiment, the gas supply source 6 is a gas cylinder to accumulate an inert gas with a high pressure. A type of the inert gas, which is accumulated in the gas supply source 6, is not limited, e.g. at least one gas selected from argon (Ar) gas and helium (He) gas. In the present embodiment, the inert gas, which is accumulated in the gas supply source 6, is argon gas.

The gas pipe 8 is a gas flow path for flowing the inert gas from the gas supply source 6 to the welding torch A1. In the present embodiment, the gas pipe 8 extends in two branches and includes a first gas pipe 81 and a second gas pipe 82. The first gas pipe 81 is a gas flow path for flowing a first inert gas to the welding torch A1. The second gas pipe 82 is a gas flow path for flowing a second inert gas to the welding torch A1.

The first gas adjustment part 71 is provided in the first gas pipe 81, and includes, for example, a solenoid valve and a flow meter. In the present embodiment, the opening of the solenoid valve is properly adjusted during the welding. In the present embodiment, the flow rate of the inert gas, which is supplied from the gas supply source 6, is adjusted by the first gas adjustment part 71, and is supplied to the welding torch A1 as the first inert gas.

The second gas adjustment part 72 is provided in the second gas pipe 82, and includes, for example, a solenoid valve and a flow meter. In the present embodiment, the opening of the solenoid valve is properly adjusted during the welding. In the present embodiment, the flow rate of the inert gas, which is supplied from the gas supply source 6, is adjusted by the second gas adjustment part 72, and is supplied to the welding torch A1 as the second inert gas.

The controller 5 controls the voltage between the non-consumable electrode 25 and the welded material 9, and the opening of the solenoid valves of the first gas adjustment part 71 and the second gas adjustment part 72. The controller 5 separately controls the opening of the solenoid valves of the first gas adjustment part 71 and the second gas adjustment part 72.

As shown in Figs.2 to 9, the welding torch A1 includes a torch body 20, a non-consumable electrode 25, a rear collet 26, a rear collet body 27, a collet retainer 28, a collet 29, a collet body 30, a block member 31, a cover 32, a lock nut 33, an insulating ring 34, an inner nozzle 35, an outer nozzle 36, a nozzle holder 37, an engaging member 38, and an electrode extrusion member 39.

In the present embodiment, the torch body 20 includes a block member 21 and cylindrical members 22 to 24. The cylindrical member 23 is disposed outwardly of the cylindrical member 22 in the radial direction. The cylindrical member 24 is disposed outwardly of the cylindrical member 23 in the radial direction. These cylindrical members 22 to 24 are concentrically disposed. The block member 21 holds the cylindrical members 22 to 24. In the present embodiment, the block member 21 holds the cylindrical members 22 to 24 with the cylindrical member 22 inserted into the block member 21. The cylindrical members 22 to 24 are integrated with the block member 21 by appropriate means such as brazing. The block member 21 receives an electrical power from the power source 4 and is made of conductive materials. The conductive materials of the block member 21 may include copper, for example. The cylindrical members 22 to 24 are made of conductive materials. The conductive materials of the cylindrical members 22 to 24 may include copper, for example.

The non-consumable electrode 25 is a conductor with a bar shape extending along an axis CL. The non-consumable electrode 25 is, for example, made of tungsten. The non-consumable electrode 25 is connected to the power source 4, for example, via a conduit cable (not shown). An arc occurs between the non-consumable electrode 25 and the welded material 9 when an arc voltage is applied between the non-consumable electrode 25 and the welded material 9.

The non-consumable electrode 25 has an electrode main part 251 and an electrode tapered part 252. The electrode main part 251 is a portion with a constant outer diameter and occupies most of the non-consumable electrode 25 except for its tip. The electrode main part 251 is formed in a generally cylindrical shape, so that the outer diameter is constant by design, which may include some errors in manufacturing. The outer diameter of the electrode main part 251 is not limited, and in the preset embodiment, it is, for example, around 3.2 mm. The electrode tapered part 252 is connected to the tip of the non-consumable electrode 25 (the one side in the axial CL direction) with respect to the electrode main part 251. The electrode tapered part 252 has a generally conical shape, with the diameter decreasing toward the tip of the non-consumable electrode 25 (the one side in the axial CL direction).

The rear collet 26, the rear collet body 27, the collet retainer 28, the collet 29 and the collet body 30 interact with each other so as to hold the non-consumable electrode 25. The rear collet 26, the rear collet body 27, the collet retainer 28, the collet 29 and the collet body 30 are made of conductive materials. The conductive materials of the rear collet 26, the rear collet body 27, the collet retainer 28, the collet 29 and the collet body 30 may include copper, for example.

The rear collet 26 and the collet 29 surround the non-consumable electrode 25. The rear collet 26 is disposed near the base end of the non-consumable electrode 25 (the other side in the axial CL direction; the upper side in Figs. 4 and 5). The collet 29 is disposed near the tip of the non-consumable electrode 25 (the one side in the axial CL direction; the lower side in Figs. 4 and 5).

The rear collet body 27 is disposed outwardly of the rear collet 26 in the radial direction. The rear collet body 27 is also disposed inwardly of the cylindrical member 22 in the radial direction. Though detailed illustration is omitted, the rear collet body 27 includes a threaded portion screwed to the cylindrical member 22. The rear collet body 27 has a knob 271 at the other side in the axial CL direction (the upper side in Figs. 4 and 5). Twisting the knob 271 enables the position adjustment of the rear collet body 27 relative to the cylindrical member 22 in the axial CL direction. The end of the rear collet body 27 at the one side in the axial CL direction is in contact with the end of the collet 29 at the other side in the axial CL direction. When the rear collet body 27 is moved toward the one side in the axial CL direction, the collet 29 is pushed to the one side in the axial CL direction. The collet body 30 is disposed outwardly of the collet 29 in the radial direction. The collet body 30 is disposed at the one side in the axial CL direction relative to the torch body 20. The collet body 30 is disposed outwardly of the non-consumable electrode 25 in the radial direction, and is formed in a cylindrical shape. The end of the collet body 30 at the other side in the axial CL direction is connected to the end of the cylindrical member 22 at the one side in the axial CL direction, for example, with a screw. As a result, the collet body 30 is held by the torch body 20 (the cylindrical member 22).

The collet retainer 28 is disposed inwardly of the rear collet body 27 in the radial direction. Though detailed illustration is omitted, the collet retainer 28 includes a threaded portion configured to be screwed to the rear collet body 27. The collet retainer 28 has a knob 281 at the other side in the axial CL direction (the upper side in Figs. 4 and 5). Twisting the knob 281 enables the position adjustment of the collet retainer 28 relative to the rear collet body 27 in the axial CL direction. The end of the collet retainer 28 at the one side in the axial CL direction is in contact with the end of the rear collet 26 at the other side in the axial CL direction. When the collet retainer 28 is moved toward the one side in the axial CL direction, the rear collet 26 is pushed to the one side in the axial CL direction.

At the tip side (the one side in the axial CL direction; the lower side in Figs. 4 and 5), the rear collet 26 and the collet 29 each have a plurality of slits extending along the axial CL direction. Between adjacent ones of the plurality of slits, a plurality of movable pieces 261 and a plurality of movable pieces 291 are provided, respectively. As described above, when the rear collet body 27 is moved toward the one side in the axial CL direction, the collet 29 is pushed to the one side in the axial CL direction. Hence, the plurality of movable pieces 291 at the tip of the collet 29 are pushed to the tip of the collet body 30 so as to reduce the diameter of each movable piece 291, thereby the collet 29 pinching and holding the non-consumable electrode 25. As described above, when the collet retainer 28 is moved toward the one side in the axial CL direction, the rear collet 26 is pushed to the one side in the axial CL direction. Hence, the plurality of movable pieces 261 at the tip of the rear collet 26 are pushed to the tip of the rear collet body 27 so as to reduce the diameter of each movable piece 261, thereby the rear collet 26 pinching and holding the non-consumable electrode 25. Thus, the rear collet 26, the rear collet body 27, the collet retainer 28, the collet 29, and the collet body 30 interact with each other, so that the non-consumable electrode 25 is tightly held.

The cover 32 is a cylindrical member made of insulating materials and covers the cylindrical member 24. The lock nut 33 is screwed to the lower end (the end at the lower side in Figs. 4 and 5) of the cylindrical member 24, and the lock nut 33 is in contact with the lower end of the cover 32.

As shown in Figs.4 and 5, the inner nozzle 35 is disposed around a portion near the tip of the non-consumable electrode 25 (the one side in the axial CL direction). The inner nozzle 35 is disposed lower (the one side in the axial CL direction) than the collet body 30. The inner nozzle 35 is generally cylindrical and is disposed outwardly of the non-consumable electrode 25 (the electrode main part 251) in the radial direction. In the present embodiment, the electrode extrusion member 39 is interposed between the inner nozzle 35 and the non-consumable electrode 25.

The engaging member 38 is disposed outwardly of the collet body 30 and the inner nozzle 35 in a manner such that their respective parts are covered. More specifically, the engaging member 38 is disposed outwardly of, thereby covering, a lower end (the end at the one side in the axial CL direction) of the collet body 30 and an upper end (the end at the other side in the axial CL direction) of the inner nozzle 35. The engaging member 38 includes a female thread 381 and a tip cylindrical part 382. The female thread 381 is provided on the inner circumference of the engaging member 38 at the upper end of the engaging member 38. The tip cylindrical part 382 is provided at the lower end of the engaging member 38. The tip cylindrical part 382 has a cylindrical shape with a smaller diameter than the other parts. A step part 383 is provided at the center of the engaging member 38 in the axial CL direction. In the illustrated example, the engaging member 38 has a cap nut-like structure in appearance.

In the present embodiment, as shown in Figs. 4, 5 and 9, the engaging member 38 and the lower end of the collet body 30 are screwed to each other. For example, a male thread 301 is provided on the outer circumference at the lower end of the collet body 30, and the female thread 381 of the engaging member 38 comes into engagement with the male thread 301 of the collet body 30. The tip cylindrical part 382 of the engaging member 38 is disposed outwardly of the inner nozzle 35, and the step part 383 of the engaging member is locked by a flange part 351 that is provided on the outer circumference of the end of the inner nozzle 35 at the other side in the axial CL direction. Hence, the inner nozzle 35 and the engaging member 38 are restricted from relative movement in the axial CL direction. The collet body 30 configured as described above corresponds to an example of a "first member" of the present invention.

The electrode extrusion member 39 is generally cylindrical and is disposed outwardly of the non-consumable electrode 25 in the radial direction and inwardly of the inner nozzle 35 in the radial direction. The inner nozzle 35 has a recessed part 353 on the inner circumference at the other side in the axial CL direction. A part of the electrode extrusion member 39 is fitted into the recessed part 353. The inner diameter of the electrode extrusion member 39 is slightly larger than the outer diameter of the non-consumable electrode 25 (the electrode main part 251). According to this, the electrode extrusion member 39 is concentrically fitted on the outside of the non-consumable electrode 25. The inner diameter of the inner nozzle 35 (the recessed part 353) is slightly larger than the outer diameter of the electrode extrusion member 39. According to this, the inner nozzle 35 is concentrically fitted on the outside of the electrode extrusion member 39. Therefore, the inner nozzle 35 is disposed concentrically with the non-consumable electrode 25 via the electrode extrusion member 39. As shown in Fig. 8, the electrode extrusion member 39 has a plurality of recessed grooves 391 on the inner circumference. The recessed grooves 391 are equally spaced along the circumferential direction of the electrode extrusion member 39. There is a gap between the non-consumable electrode 25 and each portion with the recessed groove 391, configuring a first gas flow path G1 to be described later.

In the present embodiment, the tip of the non-consumable electrode 25 is aligned with the tip of the inner nozzle 35 in the axial CL direction or protrudes slightly from the tip of the inner nozzle 35 to the one side in the axial CL direction. A protruding length P1 of the tip of the non-consumable electrode 25 protruding from the tip of the inner nozzle 35 to the one side in the axial CL direction ranges, for example, from 0 to 2 mm.

The nozzle holder 37 is cylindrical. The nozzle holder 37 is integrally connected to the outer circumference of the intermediate part of the collet body 30 in the axial CL direction by brazing, for example.

As shown in Figs. 4 and 5, the outer nozzle 36 is disposed outwardly of the inner nozzle 35 in the radical direction. In the illustrated example, the outer nozzle 36 has a generally cylindrical shape with a smaller diameter at the tip (the one side in the axial CL direction) than the other parts. In the present embodiment, the outer nozzle 36 is disposed concentrically with the non-consumable electrode 25 and the inner nozzle 35. The outer nozzle 36 is screwed to the outer circumference of the nozzle holder 37.

As shown in Figs. 4 and 9, in the present embodiment, the tip of the inner nozzle 35 protrudes from the tip of the outer nozzle 36 to the one side in the axial CL direction. A protruding length P2 of the tip of the inner nozzle 35 protruding from the tip of the outer nozzle 36 to the one side in the axial CL direction ranges, for example, from 0 to 5 mm.

The insulating ring 34 is a cylindrical member made of insulating materials. The insulating ring 34 is interposed between the lock nut 33 and the outer nozzle 36 in the axial CL direction.

As shown in Figs. 4 to 9, in the present embodiment, the welding torch A1 includes a first gas flow path G1, a second gas flow path G2, and a cooling water flow path W.

The first gas flow path G1 is a flow path for flowing a first inert gas. In Figs. 4, 5 and 9, the flow of the first inert gas in the first gas flow path G1 is shown as double-dashed arrows. The first gas flow path G1 is provided between the rear collet body 27 and the cylindrical member 22, between the collet 29 and the collet body 30, between the non-consumable electrode 25 (the electrode main part 251) and the collet 29, between the non-consumable electrode 25 (the electrode main part 251) and the collet body 30, between the non-consumable electrode 25 (the electrode main part 251) and the electrode extrusion member 39, and between the non-consumable electrode 25 (the electrode main part 251) and the inner nozzle 35, respectively.

In the present embodiment, as shown in Fig. 5, the upper end of the cylindrical member 22 has a first gas inlet 221 into which the first inert gas is introduced. The first gas inlet 221 leads to the first gas flow path G1. When the first inert gas is introduced from the first gas inlet 221, the first inert gas flows through the first gas flow path G1 from the other side to the one side in the axial CL direction, passes between the non-consumable electrode 25 (the electrode main part 251) and the inner nozzle 35, and then is discharged from an opening 352 on the tip of the inner nozzle 35.

The second gas flow path G2 is a flow path for flowing a second inert gas. In Figs. 4, 5 and 9, the flow of the second inert gas in the second gas flow path G2 is shown as dashed arrows. The second gas flow path G2 is provided between the cylindrical member 23 and the cylindrical member 24, between the cylindrical member 22 and the cylindrical member 24, between the collet body 30 and the cylindrical member 22, between the collet body 30 and the insulating ring 34, within the nozzle holder 37, between the engaging member 38 and the outer nozzle 36, and between the inner nozzle 35 and the outer nozzle 36, respectively. In the present embodiment, as shown in Figs. 4 and 7, the lower end of the cylindrical member 22 has a plurality of connecting pores 222 that penetrate through the thickness of the cylindrical member 22. The plurality of connecting pores 222 are evenly distributed in the circumferential direction of the cylindrical member 22. The second gas flow path G2 is interconnected through the plurality of connecting pores 222 between the cylindrical member 22 and the cylindrical member 24 and between the collet body 30 and the cylindrical member 22.

In the present embodiment, as shown in Fig. 5, the torch body 20 (the block member 21) has a second gas inlet 211 into which the second inert gas is introduced. The second gas inlet 211 leads to the second gas flow path G2. When the second inert gas is introduced from the second gas inlet 211, the second inert gas flows through the second gas flow path G2 from the other side to the one side in the axial CL direction, passes between the inner nozzle 35 and the outer nozzle 36, and then the second inert gas is discharged from an opening 362 on the tip of the outer nozzle 36.

The cooling water flow path W is a path for flowing a cooling water. In Fig. 4, the flow of the cooling water in the cooling water flow path W is shown as solid arrows. The cooling water flow path W is mainly provided between the cylindrical member 22 and the cylindrical member 23. The cooling water flow path W includes a water supply side path W1 and a water return side path W2. Though detailed illustration is omitted, when a cooling water is introduced from an cooling water inlet at the appropriate location in the block member 21, the cooling water flows through the water supply side path W1 from the other side to the one side in the axial CL direction. Then, the cooling water flows reversely at the lower end of the cylindrical member 23, flows through the water return side path W2 from the one side to the other side in the axial CL direction, and is discharged from a cooling water outlet on the block member 21.

In the present embodiment, the flow rate of the first inert gas introduced into the first gas inlet 221 is adjusted by the above first gas adjustment part 71 (see Fig. 1). The first gas adjustment part 71 is interposed between the gas supply source 6 and the first gas flow path G1. The amount of the first inert gas flowing in the first gas flow path G1 is appropriately adjusted by the first gas adjustment part 71.

In the present embodiment, the adjustment of the flow rate of the first inert gas introduced into the first gas inlet 221 is performed by the first gas adjustment part 71. The first gas adjustment part 71 adjusts the flow rate of the first inert gas through the first gas pipe 81. The configuration of the first gas adjustment part 71 is not limited to this, and, for example, the first gas adjustment part 71 may adjust the flow rate of the first inert gas introduced into the first gas inlet 221 by adjusting the gas pressure and/or velocity of the first inert gas. Therefore, "the adjustment of the flow rate of the first inert gas introduced into the first gas inlet (221)" includes the case that the first gas adjustment part 71 adjusts the gas pressure and/or velocity of the first inert gas.

In the present embodiment, the flow rate of the second inert gas introduced into the second gas inlet 211 is adjusted by the above second gas adjustment part 72 (see Fig. 1). The second gas adjustment part 72 is interposed between the gas supply source 6 and the second gas flow path G2. The amount of the second inert gas flowing in the second gas flow path G2 is appropriately adjusted by the second gas adjustment part 72. Hence, the flow rate of the first inert gas introduced into the first gas inlet 221 and the flow rate of the second inert gas introduced into the second gas inlet 211 may be independently adjusted. The flow rate of the first inert gas introduced into the first gas inlet 221 and the flow rate of the second inert gas introduced into the second gas inlet 211 are not limited. An example of the flow rate of the first inert gas introduced into the first gas inlet 221 is around 5 to 12 L/min. An example of the flow rate of the second inert gas introduced into the second gas inlet 211 is around 5 to 15 L/min.

In the present embodiment, the adjustment of the flow rate of the second inert gas introduced into the second gas inlet 211 is performed by the second gas adjustment part 72. The second gas adjustment part 72 adjusts the flow rate of the second inert gas flow through the second gas pipe 82. The configuration of the second gas adjustment part 72 is not limited to this, and, for example, the second gas adjustment part 72 may adjust the flow rate of the second inert gas introduced into the second gas inlet 211 by adjusting the gas pressure and/or velocity of the first inert gas. Therefore, "the adjustment of the flow rate of the second inert gas introduced into the second gas inlet (211)" includes the case that the second gas adjustment part 72 adjusts the gas pressure and/or velocity of the second inert gas.

As sown in Fig. 9, the gap between the non-consumable electrode 25 (the electrode main part 251) and the inner nozzle 35 in the first gas flow path G1 is smaller than the gap between the inner nozzle 35 and the outer nozzle 36 in the second gas flow path G2. The minimum gap (the first minimum gap L1) between the non-consumable electrode 25 (the electrode main part 251) and the inner nozzle 35 in the first gas flow path G1 is, for example, around 0.5 to 1.5 mm. The minimum gap (the second minimum gap L2) between the inner nozzle 35 and the outer nozzle 36 in the second gas flow path G2 is, for example, around 2 to 5 mm. Regarding the ratio of the first minimum gap L1 to the second minimum gap L2, the first minimum gap L1 is, for example, 0.2 to 0.5 times the second minimum gap L2, preferably 0.2 to 0.3 times the second minimum gap L2. The flow velocity of the first inert gas flowing in the first minimum gap L1 of the first gas flow path G1 is, for example, around 8 to 18 m/sec.

Next, effects of the present invention are described below.

The welding torch A1 of the present embodiment includes the non-consumable electrode 25, the inner nozzle 35, and the outer nozzle 36, each extending in the axial direction. The inner nozzle 35 is concentrically disposed on the outside of the non-consumable electrode 25, and the first gas flow path G1 for flowing the first inert gas is provided between the non-consumable electrode 25 and the inner nozzle 35. The outer nozzle 36 is concentrically disposed outwardly of the inner nozzle 35 in the radical direction, and the second gas flow path G2 for flowing the second inert gas is provided between the inner nozzle 35 and the outer nozzle 36. According to this configuration, during welding operations, the first inert gas flowing in the first gas flow path G1 and discharged from the tip of the inner nozzle 35 functions as the plasma gas, and the second inert gas flowing in the second gas flow path G2 and discharged from the tip of the outer nozzle 36 functions as the shield gas. Thus, the arc generated between the welded material 9 and the tip of the non-consumable electrode 25 is pinched, thereby more efficient welding can be performed by using an arc (plasma arc) with high energy density.

The welding torch A1 includes the electrode extrusion member 39 and the engaging member 38. The electrode extrusion member 39 is concentrically disposed on the outside of the non-consumable electrode 25. The inner nozzle 35 is concentrically disposed on the outside of the electrode extrusion member 39. Thus, the inner nozzle 35 is disposed concentrically with the non-consumable electrode 25 via the electrode extrusion member 39.

The engaging member 38 is disposed on the outside of the lower end (the end at the one side in the axial CL direction) of the collet body 30 (the first member) and of the upper end (the end at the other side in the axial CL direction) of the inner nozzle 35, so that the engaging member 38 can come into engagement with the collet body 30 and the inner nozzle 35. According to this configuration, there can be some flexibility in the radial direction between the engaging member 38 and the collet body 30 or the inner nozzle 35. Therefore, even if the non-consumable electrode 25 is, for example, slightly bent due to manufacturing errors, the inner nozzle 35 can be disposed concentrically with the non-consumable electrode 25.

When the inner nozzle 35 is offset from the center of the non-consumable electrode 25, an uneven flow occurs in the first inert gas (plasma gas) discharged from the opening 352 at the tip of the inner nozzle 35. The minimum gap (the first minimum gap L1) between the non-consumable electrode 25 (the electrode main part 251) and the inner nozzle 35, which constitutes the first gas flow path G1, is narrow and it can easily lead to an uneven flow in the first inert gas (plasma gas) . However, the structure comprising the electrode extrusion member 39 and the engagement member 38 as described above ensures that the inner nozzle 35 is disposed concentrically with the non-consumable electrode 25. This is suitable for improving welding quality.

The engaging member 38 and the lower end of the collet body 30 (the first end at the one side in the axial CL direction) are screwed to each other. This configuration allows flexibility in the dimension between the engaging member 38 and the collet body 30 with a relatively simple structure. When replacing the inner nozzle 35, the inner nozzle 35 can be easily removed by loosening the female thread 381 of the engaging member 38, which improves workability for replacing the inner nozzle 35.

Since the inner nozzle 35 is disposed outwardly of the non-consumable electrode 25 concentrically in the radial direction, the first inert gas flowing in the first gas flow path G1 between the non-consumable electrode 25 and the inner nozzle 35 becomes a generally uniform and relatively high-speed air flow around the non-consumable electrode 25, which is discharged from the opening 352 at the tip of the inner nozzle 35. Thus, even when welding a material 9 made of low-melting metal such as galvanized steel plate, the high-speed first inert gas flowing around the non-consumable electrode 25 blows away fumes generated during welding. Advantageously, this prevents the fumes from being attached to the tip of the non-consumable electrode 25 or the tip of the inner nozzle 35.

Further, the tip of the non-consumable electrode 25 is aligned with the tip of the inner nozzle 35 in the axial CL direction or protrudes slightly from the tip of the inner nozzle 35 to the one side in the axial CL direction. A protruding length P1 of the tip of the non-consumable electrode 25 protruding from the tip of the inner nozzle 35 to the one side in the axial CL direction ranges from 0 to 2 mm. According to the tip position of the non-consumable electrode 25, the gap between the non-consumable electrode 25 and the inner nozzle 35 is kept generally constant and narrow along the axial CL direction in a range from the middle of the inner nozzle 35 to the tip or a point close to the tip of the nozzle. Thus, the high speed first inert gas flowing around the non-consumable electrode 25 is discharged from the opening 352 at the tip of the inner nozzle 35 with little decrease in flow velocity. This is preferable in preventing attachment of fumes and so forth to the tip of the non-consumable electrode 25 or the tip of the inner nozzle 35. Advantageously, the above effects can be realized simply by appropriately designing the shape and arrangement of the inner nozzle 35, which enables the structure of the welding torch A1 to be relatively simple and the tip of the welding torch A1 to be downsized.

The welding torch A1 has the first gas inlet 221 leading to the first gas flow path G1 and the second gas inlet 211 leading to the second gas flow path G2. The flow rate of the first inert gas introduced into the first gas inlet 221 and the flow rate of the second inert gas introduced into the second gas inlet 211 are independently adjusted. According to this configuration, when the flow rate of the second inert gas (shield gas) is adjusted to increase or decrease, the flow rate of the first inert gas (plasma gas) does not unintentionally change, so that the flow rate of the first inert gas can be set to a preferred value. Conversely, when the flow rate of the first inert gas (plasma gas) is adjusted, the flow rate of the second inert gas (shielding gas) does not change. In other words, according to the welding torch A1 and the welding system B1, it is possible to supply the desired flow rate of the first inert gas (plasma gas) between the non-consumable electrode 25 and the welded material 9, and it is also possible to supply the sufficient second inert gas (shield gas). Since the supply of the first inert gas (plasma gas) can be set as intended, the arc (plasma arc) generated between the welded material 9 and the non-consumable electrode 25 can be more easily controlled.

The gases (the first inert gas and the second inert gas) supplied to the welding torch A1 are at least one gas selected from argon gas and helium gas. According to this configuration in which only the inert gas within limited gas types is supplied to the welding torch A1, it is easy to handle and control gases for welding. As in the present configuration in which the first inert gas and the second inert gas are the same gas type (argon gas), the welding system B1 may need to only have a single gas supply source 6 as the supply source of the first inert gas and the second inert gas. Therefore, it is easy to control the gases (the first inert gas and the second inert gas) supplied to the welding torch A1, and the configuration of the welding system B1 is simplified.

In the welding torch A1, the minimum gap (the first minimum gap L1) between the non-consumable electrode 25 (the electrode main part 251) and the inner nozzle 35 in the first gas flow path G1 is 0.2 to 0.5 times the minimum gap (the second minimum gap L2) between the inner nozzle 35 and the outer nozzle 36 in the second gas flow path G2. Such small ratio of the first minimum gap L1 to the second minimum gap L2 can efficiently increase the velocity of the first inert gas flowing between the non-consumable electrode 25 and the inner nozzle 35. Therefore, the attachment of fumes and so forth to the tip of the non-consumable electrode 25 and the tip of the inner nozzle 35 is appropriately prevented, and the arc (plasma arc) generated between the welded material 9 and the non-consumable electrode 25 is pinched, thereby the concentration of the arc being enhanced.

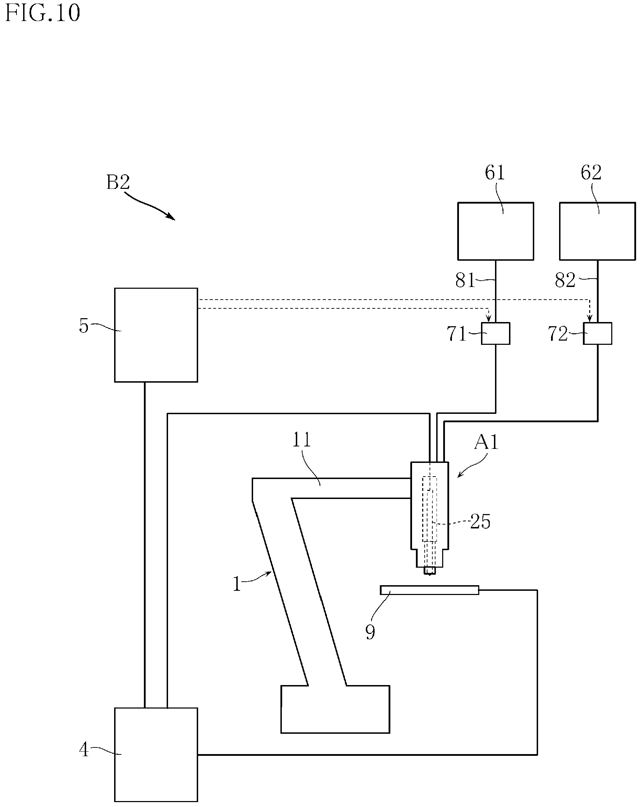

Fig. 10 shows another example of a welding system according to the present invention. The welding system B2 shown in Fig. 10 differs from the welding system B1 according to the above embodiment in the gas supply mode of the first inert gas and the second inert gas. The welding system B2 includes a first gas supply source 61 and a second gas supply source 62 instead of the gas supply source 6 in the above embodiment. The first gas supply source 61 is a gas cylinder that stores the first inert gas under high pressure. The second gas supply source 62 is a gas cylinder that stores the second inert gas different from the first inert gas under high pressure. The gas types of the first inert gas stored in the first gas supply source 61 and the gas type of the second inert gas stored in the second gas supply source 62 is not limited. The first inert gas in the first gas supply source 61 is, for example, argon gas. The second inert gas in the second gas supply source 62 is, for example, one of argon gas, helium gas, and nitrogen (N₂) gas, or a mixture of these gases.

The first gas supply source 61 is interconnected with a first gas pipe 81, and the first gas adjustment part 71 is provided in the first gas pipe 81. The flow rate of the first inert gas supplied from the first gas supply source 61 is adjusted by the first gas adjustment part 71, and then is sent to the welding torch A1. The second gas supply source 62 is interconnected with a second gas pipe 82, and the second gas adjustment part 72 is provided in the second gas pipe 82. The flow rate of the second inert gas supplied from the second gas supply source 62 is adjusted by the second gas adjustment part 72, and then is sent to the welding torch A1. The welding system B2 shown in Fig. 10 has same effects as those of the above embodiment within the same configuration as the welding torch A1 and the welding system B1 of the above embodiment.

Though the embodiments of the present invention are described, the scope of the present invention is not limited to the above embodiments, and any modifications within the scope of the matters described in each claim are fully encompassed by the scope of the present invention.

In the welding torch A1 of the above embodiment, the case where the outer nozzle 36 is disposed concentrically with the inner nozzle 35 is described, but the present invention is not limited to this. The outer nozzle 36 may be offset from the inner nozzle 35 in the radical direction. Further, the second gas inlet for introducing the second inert gas may be provided on a side surface of the outer nozzle 36.

### EXPLANATION OF REFERENCES

A1: welding torch, 211: second gas inlet, 221: first gas inlet, 25: non-consumable electrode, 30: collet body (first member), 35: iner nozzle, 36: outer nozzle, 38: engaging member, 39: electrode extrusion member, G1: first gas flowing path, G2: second ga flowing path, CL: axis, P1: protruding length, L1: first minimum gap, L2: second minimum gap

## Claims

1. A welding torch comprising:
a non-consumable electrode extending along an axial direction;
a first member with a cylindrical shape disposed outwardly of the non-consumable electrode in a radial direction;
an inner nozzle disposed outwardly of the non-consumable electrode in the radial direction and at one side in the axial direction with respect to the first member;
an engaging member disposed outwardly of and covering a first end of the first member at the one side in the axial direction to a second end of the inner nozzle at another side in the axial direction, the engaging member coming into engagement with the first member and the inner nozzle;
an outer nozzle disposed outwardly of the inner nozzle in a radial direction; and
an electrode extrusion member disposed outwardly of the non-consumable electrode in the radial direction and inwardly of the inner nozzle in the radial direction,
wherein the electrode extrusion member is concentrically disposed outwardly of the non-consumable electrode, and the inner nozzle is concentrically disposed outwardly of the electrode extrusion member,
a first gas flow path for flowing a first inert gas is provided between the non-consumable electrode and the inner nozzle, and
a second gas flow path for flowing a second inert gas is provided between the inner nozzle and the outer nozzle.

2. The welding torch according to claim 1, wherein the engaging member and the first end of the first member are screwed to each other.

3. The welding torch according to claim 1 or 2, further comprising a first gas inlet leading to the first gas flow path, and a second gas inlet leading to the second gas flow path,
wherein a flow rate of the first inert gas introduced into the first gas inlet and a flow rate of the second inert gas introduced into the second gas inlet are independently adjusted.

4. The welding torch according to claim 3, wherein the first inert gas and the second inert gas are at least one gas selected from argon gas and helium gas.

5. The welding torch according to any one of claims 1 to 4, wherein the first gas flow path has a first minimum gap that is a minimum gap between the non-consumable electrode and the inner nozzle, and the second gas flow path has a second minimum gap that is a minimum gap between the inner nozzle and the outer nozzle, the first minimum gap being 0.2 to 0.5 times the second minimum gap.
